# EUROPEAN PATENT SPECIFICATION

(11) **EP 1 418 734 B1**
(45) Date of publication and mention of the grant of the patent: **12.12.2007**
(21) Application number: 02445146.0
(22) Date of filing: 06.11.2002
(51) Int. Cl.: H04M 1/22, G06F 3/02

(54) **Means for illuminating keypad and device incorporating same**
Mittel zur Beleuchtung eines Tastenfelds und Vorrichtung mit solchem Mittel
Moyen pour illuminer un bloc de touches et dispositif l'incorporant

(43) Date of publication of application: 12.05.2004
(60) Divisional application: 07109791.9
(73) Proprietor: Sony Ericsson Mobile Communications AB, 221 88 Lund (SE)
(72) Inventor: Grip, Martin, 211 30 Malmö (SE)
(74) Representative: Akerman, Marten Lennart

(56) References cited:
- EP-A- 1 094 482
- US-A- 5 975 711
- US-A- 6 040 822

## Description

### Field of the invention

The invention relates to means for illuminating a keypad using a light source arranged in or at a display in a device and directing a part of the light from the light source to the keypad. A light guide is used to direct the light. The invention also relates to a device incorporating the means, such as a mobile telephone.

### State of the art

Today most mobile telephones use electro luminance foils and/or LEDs together with light guides as backlight for both the liquid crystal display (LCD) and/or the keypad. A bright and even backlight under both LCD and the keypad is to prefer.

When using LEDs as backlight for the keypad it is often hard to get an even light distribution underneath the keypad due to too little space for the light guide. Often there is not even room for a light guide so that the light is only spread by the keypad itself. At the top of the keypad where normally the YES and NO buttons or soft keys are located it is very hard to fit in an LED. This often results in poorly lightened top keypad buttons.

Another problem is that LEDs can be very expensive depending on colour, and to obtain an even light distribution over the keypad, quite many LEDs may have to be used.

US 5,975,711 discloses integrated display panel assemblies. One embodiment is a cellular phone comprising a light conducting panel illuminating both a liquid crystal display and a keypad.

EP 1 094 482 discloses a light guide for illuminating the display or keyboard of a portable communication device. The light guide comprises a substantially transparent plate-formed element.

US 6,040,822 discloses an illuminated keyboard system. The system comprises a conductor element for conducting a portion of light from a display panel to illuminate a keyboard.

The following two documents form part of the state of the art according to Article 54(3) EPC. Thus, they can only be cited with regard to novelty and not inventive step.

WO 03/047222 discloses a modular liquid crystal display, wherein the light guiding means comprises apertures in the frame, a light guide and microlenses.

EP 1 294 161 discloses an electronic device with a light guide for illuminating the display and keypad of a portable communication device. The light guide comprises a light transmitting substrate located beneath the display and the keypad.

### Summary of the invention

A solution that both improves the light output and evenness and saves money is to utilize the already existing backlight for the display. By controlling the light leakage, i.e. using part of the excessive light, from the LCD module that often is placed just above the keypad in conventional phones, it is possible to use fewer LEDs for the keypad and still obtain an even light distribution even for the top keys of the keypad.

The invention provides means for illumination in a device, comprising: a display; a light source for illuminating the display; a keypad to be illuminated and guiding means for guiding part of the light from the light source to the keypad, the display being mounted in a frame, wherein the guiding means comprises apertures in the frame and a light guide connected to the apertures.

According to the invention the light guide comprises a rubber pad which is partly translucent.

The light guide may comprise a lens distributing the light onto the keypad.

Preferably, the rubber pad is shaped to extend in front of the apertures to distribute the light onto the keypad, and shaped to extend into keys of the keypad.

Suitably, the rubber pad forms part of a structure holding the keys of the keypad together.

An embodiment of the invention provides a device including such an illumination means.

The display may comprise a LCD unit.

In one embodiment, the light source comprises LEDs and a light guide located beneath or above the LCD unit.

Suitably, the LEDs are located at one or more edges of the light guide.

The device may be a portable telephone, a pager, a communicator, a smart phone or an electronic organiser.

### Brief description of the drawings

The invention will be described in detail below with reference to the accompanying drawings, in which:
Fig. 1 is a perspective view of a mobile telephone with the upper shell removed;
Fig. 2 is a perspective view of a display with apertures in the frame according to the invention;
Fig. 3 is a schematic side view of components of the invention.

### Detailed description of preferred embodiments

The invention will be described in detail with a mobile telephone as an example. The invention is equally applicable in other devices having a display and keypad, such as pagers, communicators, smart phones and electronic organizers.

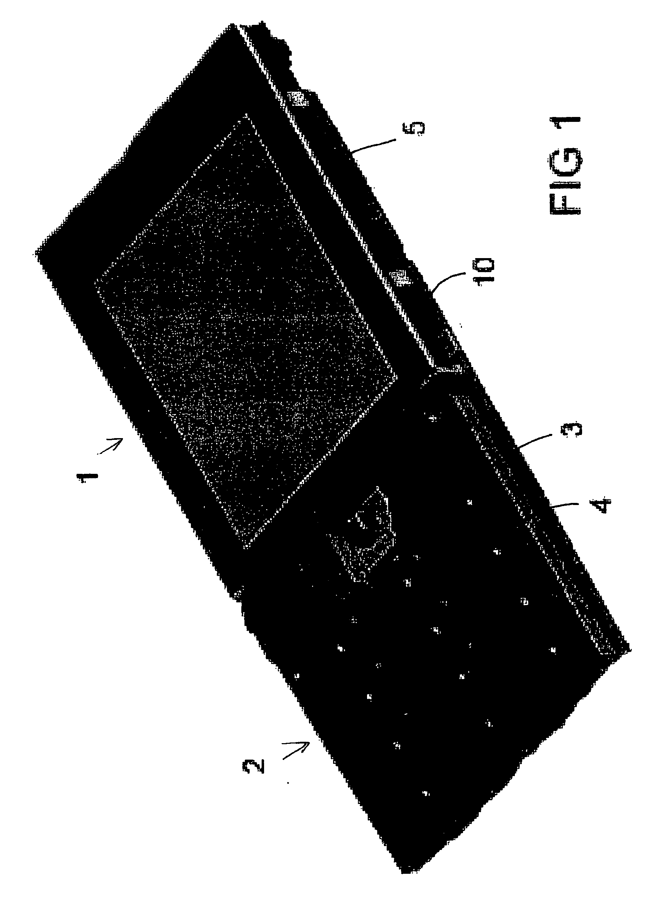

Fig. 1 shows parts of a mobile telephone with the top shell removed. On top of the phone's printed circuit board PCB is placed a display 1 and the interior parts of the keypad 2. As is shown in fig. 1, the keypad comprises a rubber pad 4 with button-like protruding parts 3. The button-like parts are adapted to receive the buttons themselves (not shown). The buttons may be made of plastic, each button fitting snugly over the button-like parts of the rubber pad 4. Usually, the buttons are partly transparent and show a figure or another symbol on the top surface as is conventional.

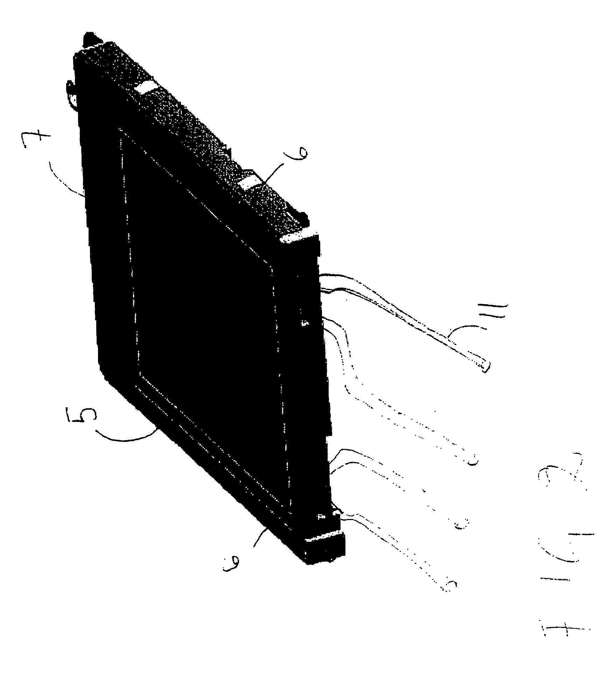

The display portion is also shown in fig. 2. It comprises an LCD module 7 mounted in a carrier or frame 5. The frame protects the LCD unit from physical damage and prevents light from leaking around the sides of the LCD unit. In accordance with the invention apertures or holes 6 are provided in the edge directed to the keypad.

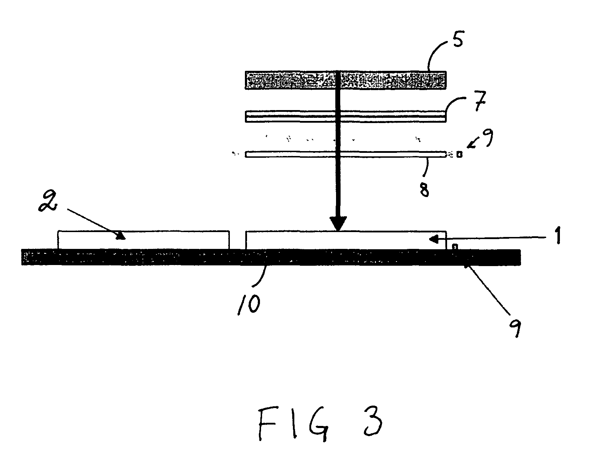

The principle of the invention is illustrated in the more schematic view of fig. 3. The phone PCB 10 carries the keypad 2, the complete display unit and one or more LEDs 9. The components of the display 1 are also shown at the top as a carrier 5, a LCD glass cell 7 comprising liquid crystals located between two glass plates and polarizers, a usually flat light guide 8 and an LED 9.

In an alternative embodiment LEDs are located at the sides of the light guide. The location of the LEDs is not critical as the light will be distributed from any LED located at an edge throughout the light guide and exit at all the sides, where the light is not blocked.

As is conventional the one or more LEDs transmit light into the light guide distributing the light upwards through the LCD module to provide the backlight of the display. The idea of the invention is to design small holes, such as the apertures 6 in fig. 2, in the surrounding carrier which contains the LCD glass cell and the backlight system to let light out in a controlled way.

In another alternative embodiment, the light guide is located on top of the carrier. In this case, the light guide distributes the light downwards through the LCD module which light is reflected to provide the illumination of the display. In other respects the function and design of the invention are identical.

In one embodiment, light is just guided out through the apertures on to the top keypad buttons. In this case there is suitably a larger distance between the top buttons and the display than shown in fig. 1.

In order to focus and direct the light, lenses may be arranged in the apertures. The lenses could be small plastic lenses inserted in the apertures or part of the rubber pad could be extended to cover the apertures. The rubber pad is at least partly translucent to transmit and guide the light.

In a further embodiment, the rubber pad 4 performs more the function of a light guide. The rubber pad is shaped to extend in front of the apertures 6. Light entering the rubber pad is distributed through the rubber pad 4, particularly in the part nearest the display, and the protruding button-like parts 3 extending into the buttons and assists in illuminating the buttons.

In a still further embodiment optical fibres 11 are connected to the apertures 6, as is shown in fig. 2. The optical fibres 11 are located near or adjacent the rubber pad, suitably at the respective row of buttons. The optical fibres may be located on top of the rubber pad, under the front shell (not shown), or below the rubber pad. The individual optical fibre is distributing light sideways as well as lengthways, so that an even light distribution is obtained. Preferably, each button is provided with its own fibre terminating at its respective button.

The illumination of the keypad is preferably completed by further LEDs or an electroluminant foil located under the rubber pad. However, according to the invention, the need for such LEDs is decreased or the size of the electroluminant foil may be decreased, especially at the top keys near the display where there is limited space. Thus, the present invention results in that fewer LEDs are required and/or better light uniformity of the keypad is obtained.

The specific design of the display, the button and the rubber pad may vary without departing from the scope of the invention, which is only limited by the claims below.

## Claims

1. Means for illumination in a device, comprising: a display (1); a light source (9) for illuminating the display (1); a keypad (2) to be illuminated; and guiding means (6) for guiding part of the light from the light source (9) to the keypad (2), **characterised in that** the display (1) is mounted in a frame (5), wherein the guiding means comprises apertures (6) in the frame and a light guide (4, 11) connected to the apertures (6), and the light guide comprises a rubber pad (4) which is partly translucent and comprised in the keypad (2).

2. Means according to claim 1, **characterised in that** the light guide comprises a lens distributing the light onto the keypad.

3. Means according to claim 1 or 2, **characterised in that** the rubber pad (4) is shaped to extend in front of the apertures (6) to distribute the light onto the keypad (2).

4. Means according to claim 3, **characterised in that** the rubber pad (4) is shaped to extend into keys of the keypad (2).

5. Means according to any one of claims 1 to 4, **characterised in that** the rubber pad (4) forms part of a structure holding keys of the keypad together.

6. A device **characterised in that** it includes an illumination means according to any one of the preceding claims.

7. A device according to claim 6, **characterised in that** the display comprises a LCD unit (7).

8. A device according to claim 7, **characterised in that** the light source comprises LEDs (9) and a light guide (8) located beneath the LCD unit (7).

9. A device according to claim 7, **characterised in that** the light source comprises LEDs and a light guide located above the LCD unit.

10. A device according to claim 8 or 9, **characterised in that** the LEDs are located at one or more edges of the light guide (8).

11. A device according to any one of claims 6 to 10, **characterised in that** the device is a portable telephone, a pager, a communicator, a smart phone or an electronic organiser.

## Patentansprüche

1. Mittel für die Beleuchtung in einem Gerät, das aufweist: ein Anzeige (1); eine Lichtquelle (9) zur Beleuchtung der Anzeige (1); ein zu beleuchtendes Tastenfeld (2); und Führungsmittel (6) zum Führen eines Teils des Lichts aus der Lichtquelle (9) zum Tastenfeld (2),
**dadurch gekennzeichet**, **dass** die Anzeige (1) in einem Rahmen (5) angebracht ist, wobei die Führungsmittel Öffnungen (6) im Rahmen und eine Lichtschiene (4, 11) umfassen, die mit den Öffnungen (6) verbunden sind, und die Lichtschiene eine Gummiauflage (4) aufweist, die teilweise lichtdurchlässig und im Tastenfeld (2) enthalten ist.

2. Mittel gemäß Anspruch 1, **dadurch gekennzeichnet, dass** die Lichtschiene eine Linse umfasst, die Licht auf das Tastenfeld verteilt.

3. Mittel gemäß Anspruch 1 oder 2, **dadurch gekennzeichnet, dass** die Gummiauflage (4) so geformt ist, dass sie sich vor den Öffnungen (6) erstreckt, um Licht auf das Tastenfeld (2) zu verteilen.

4. Mittel gemäß Anspruch 3, **dadurch gekennzeichnet, dass** die Gummiauflage (4) so geformt ist, dass sie sich in die Tasten des Tastenfelds (2) hinein erstreckt.

5. Mittel gemäß einem der Ansprüche 1 bis 4, **dadurch gekennzeichnet, dass** die Gummiauflage (4) einen Teil der Konstruktion bildet, die die Tasten des Tastenfeld zusammenhält.

6. Gerät, **dadurch gekennzeichnet, dass** es ein Beleuchtungsmittel gemäß einem der vorhergehenden Ansprüche enthält.

7. Gerät gemäß Anspruch 6, **dadurch gekennzeichnet, dass** die Anzeige eine LCD-Einheit (7) enthält.

8. Gerät gemäß Anspruch 7, **dadurch gekennzeichnet, dass** die Lichtquelle LEDs (9) und eine Lichtschiene (8) umfasst, die sich neben der LCD-Einheit (7) befinden.

9. Gerät gemäß Anspruch 7, **dadurch gekennzeichnet, dass** die Lichtquelle LEDs und eine Lichtschiene umfasst, die sich über der LCD-Einheit befinden.

10. Gerät gemäß Anspruch 8 oder 9, **dadurch gekennzeichnet, dass** die LEDs sich an einer oder mehreren Kanten der Lichtschiene (8) befinden.

11. Gerät gemäß einem der Ansprüche 6 bis 10, **dadurch gekennzeichnet, dass** das Gerät ein tragbares Telefon, ein Pager, eine Sprechanlage (Communicator), ein Smartphone oder ein elektronischer Organiser ist.

## Revendications

1. Moyen d'illumination dans un dispositif, comprenant : un affichage (1) ; une source lumineuse (9) destinée à illuminer l'affichage (1) ; un clavier (2) destiné à être illuminé ; et un moyen de guidage (6) pour guider une partie de la lumière de la source lumineuse (9) vers le clavier (2), **caractérisé en ce que** l'affichage (1) est monté dans un cadre (5), dans lequel le moyen de guidage comprend des ouvertures (6) dans le cadre et un guide de lumière (4, 11) relié aux ouvertures (6), et le guide de lumière comprend un coussinet de caoutchouc (4) qui est partiellement translucide et compris dans le clavier (2).

2. Moyen selon la revendication 1, **caractérisé en ce que** le guide de lumière comprend une lentille distribuant la lumière sur le clavier.

3. Moyen selon la revendication 1 ou 2, **caractérisé en ce que** le coussinet de caoutchouc (4) est mis en forme pour se placer en face des ouvertures (6) pour distribuer la lumière sur le clavier (2).

4. Moyen selon la revendication 3, **caractérisé en ce que** le coussinet de caoutchouc (4) est mis en forme pour se placer dans des touches du clavier (2).

5. Moyen selon l'une quelconque des revendications 1 à 4, **caractérisé en ce que** le coussinet de caoutchouc (4) fait partie d'une structure maintenant ensemble les touches du clavier.

6. Dispositif **caractérisé en ce qu'**il comprend un moyen d'illumination selon l'une quelconque des revendications précédentes.

7. Dispositif selon la revendication 6, **caractérisé en ce que** l'affichage comprend une unité LCD (7).

8. Dispositif selon la revendication 7, **caractérisé en ce que** la source lumineuse comprend des LED (9) et un guide de lumière (8) situés sous l'unité LCD (7).

9. Dispositif selon la revendication 7, **caractérisé en ce que** la source lumineuse comprend des LED et un guide de lumière situés au-dessus de l'unité LCD.

10. Dispositif selon la revendication 8 ou 9, **caractérisé en ce que** les LED sont situées au niveau d'un ou plusieurs bords du guide lumineux (8).

11. Dispositif selon l'une quelconque des revendications 6 à 10, **caractérisé en ce que** le dispositif est un téléphone portable, un dispositif d'avertissement d'appel, un communicateur, un téléphone multifonction ou un agenda électronique.
